# EUROPÄISCHE PATENTSCHRIFT

(11) **EP 1 096 350 B1**
(45) Veröffentlichungstag und Bekanntmachung des Hinweises auf die Patenterteilung: **18.01.2006**
(21) Anmeldenummer: 00123526.6
(22) Anmeldetag: 27.10.2000
(51) Int. Cl.: G05B 23/02, G01M 17/00

(54) **Servicesystem und Verfahren zur Wartung und Kontrolle der Funktionsweise einer Komponente, insbesondere einer Funktions- oder Antriebskomponente**
Vehicle service system and method for testing and maintenance of a component especially for a functional component or a drive unit
Système de service et méthode pour essai et entretien d'un composant en particulier pour un élément fonctionnel ou une unité d'entraînement

(30) Priorität: 29.10.1999 DE 19952391
(43) Veröffentlichungstag der Anmeldung: 02.05.2001
(73) Patentinhaber: Voith Turbo GmbH, 89522 Heidenheim (DE)
(72) Erfinder: Edelmann, Peter, 89522 Heidenheim (DE); Brunnengräber, Stefan, 89522 Heidenheim (DE); Dietzel, Bernd, 89428 Syrgensteln (DE)
(74) Vertreter: Dr. Weitzel & Partner

(56) Entgegenhaltungen:
- EP-A- 0 612 039
- DE-A- 19 529 741
- DE-A- 19 543 784
- DE-A- 19 847 622
- US-A- 4 843 557
- US-A- 5 515 266

## Beschreibung

Die Erfindung betrifft ein Servicesystem mit einer Serviceschnittstelleneinrichtung für Steuereinrichtungen, insbesondere für den Einsatz in Fahrzeugen für Komponenten, insbesondere Funktions- oder Antriebskomponenten für den Einsatz in Fahrzeugen, insbesondere für eine Getriebebaueinheit; ferner ein Verfahren zur Wartung und Kontrolle der Funktionsweise einer Komponente, insbesondere einer Funktions- oder Antriebskomponente, insbesondere einer Getriebebaueinheit

Zur Durchführung von Wartungs- und/oder Kontrollarbeiten in Fahrzeugen, welche auch im Rahmen einer Diagnose erfolgen, wurden in der Regel bisher die den Antriebs- oder anderen Funktionskomponenten zugeordneten elektronischen Steuervorrichtungen, insbesondere die Steuereinrichtungen verwendet, und aus diesen die entsprechenden Daten zur Diagnose beziehungsweise zur Überwachung der Funktionsweise ausgelesen. Dazu war es erforderlich, daß am Installationsort der Steuerung, insbesondere der Steuereinrichtung diese von einem Servicetechniker manuell mit einer Serviceeinrichtung beziehungsweise einer Diagnoseeinrichtung verbunden wurde. Die Verbindung erfolgte über Diagnosekabel oder drahtlos, wie beispielsweise aus DE 195 43 784 A1 vorbekannt. Die Service-beziehungsweise Diagnoseeinrichtung umfaßt dabei Mittel zur Kopplung mit der elektronischen Steuereinrichtung, insbesondere der Steuereinrichtung der Antriebskomponente, eine Auswerteinrichtung, in welcher die über die Kopplung mit der elektronischen Steuereinrichtung eingelesenen beziehungsweise einlesbaren Daten verarbeitet und ausgewertet werden können, und zur schnellen Erkennung Mittel zur Visualisierung der Diagnoseergebnisse. Diese einzelnen Mittel sind dabei im allgemeinen zu einer Baueinheit in Form eines Notebooks oder eines PC's zusammengefaßt. Aufgrund der erforderlichen Delegierung eines Servicetechnikers zum Installationsort der Steuereinrichtung ist die Diagnose durch einen hohen personellen und zeitlichen Aufwand charakterisiert. Dies ist jedoch nicht immer vertretbar. Des weiteren kann die Diagnose nur in bestimmten zeitlichen, vorwählbaren Intervallen durchgeführt werden, wobei auftretende Störungen, die nicht sofort zum Ausfall der Antriebskomponente oder einer anderen zur Betriebsweise des Fahrzeuges erforderlichen Komponente, beispielsweise eines Nebenaggregates beziehungsweise einer derart erheblichen Verschlechterung der Funktionsweise der Antriebskomponente oder der Funktionskomponente führen, nicht erkannt werden. Eine ständige Überwachung der Funktionsweise der Antriebs- oder einer anderen Funktionskomponente, insbesondere einer Getriebebaueinheit, ist mit der derzeitigen Lösung nicht möglich. Zur Gewährleistung einer nahezu sicheren Funktionsweise der Antriebs- oder einer anderen Funktionskomponente, insbesondere der Getriebebaueinheit ist es zudem erforderlich, die Zeitintervalle zwischen den einzelnen Diagnosevorgängen beziehungsweise Wartungs- oder Kontrollarbeiten derart zu wählen, daß irreversible Schädigungen an der Antriebs- oder der Funktionskomponente beziehungsweise den mit diesen gekoppelten Elementen ausgeschlossen werden.

Aus der Druckschrift DE 195 29 741 A1 ist ein Servicesystem, umfassend eine Serviceeinrichtung und ein in einem Fahrzeug angeordnetes Steuergerät bekannt, bei welchem der Austausch der Daten drahtlos erfolgt. Dazu ist eine Vorrichtung zum drahtlosen Austausch von Daten zwischen der Serviceeinrichtung und dem Steuergerät im Kraftfahrzeug vorgesehen. Diese umfaßt eine Sende-/Empfangseinrichtung am Kraftfahrzeug, die abnehmbar am Kraftfahrzeug angeordnet ist. Die abnehmebare Sende- und Empfangseinrichtung ist dabei auf die technischen Gegebenheiten der Serviceeinrichtung, zum Beispiel einer hohen Datenübertragungsrate zugeschnitten. Der Einsatz dieses Servicesystems erfolgt im Rahmen einer Servicewerkstatt oder bei Fertigung von Fahrzeugen. Ein Nachteil dieser Ausführung besteht somit darin, daß zum Zwecke eines Diagnosevorganges und zur Fehlererkennung das Fahrzeug immer in die Werkstatt gebracht werden muß, was bei der Betriebsweise des Fahrzeuges entweder immer in entsprechenden Zeitintervallen erfolgen sollte oder aber nach Auftreten von Fehlern durch den Fahrer vorgenommen wird. Das Servicesystem erlaubt somit keinen Eingriff von außerhalb vor dem Auftreten von Fehlern, die zu Schädigungen an einzelnen Antriebskomponenten führen können.

Zur Lösung dieses Problemes ist aus der Druckschrift DE 198 47 622 A1 ein Fahrzeug-Informationssammelsystem und eine Fahrzeug-Untersuchungsvorrichtung bekannt, wobei das Fahrzeugzustands-Informationssammelsystem ein Informationszentrum umfaßt, das mit einer Vielzahl von Fahrzeug-Untersuchungsvorrichtungen derart verbunden ist, daß diese miteinander kommunizieren können. Das Informationszentrum legt dabei einen zu sammelnden Zustandsinformationspunkt und Zielfahrzeuge zum Sammeln von Informationen fest und sendet eine Untersuchungsanforderung an die Zielfahrzeuge. Nach Anforderung führt die Fahrzeug-Untersuchungsvorrichtung spezifizierte Untersuchungen durch und sendet die durch die Untersuchung erhaltenen Zustandsinformationen zu dem Informationszentrum. Dadurch können die Fahrzeuge bei entsprechender Auswertung einer Diagnose unterzogen werden, ohne daß diese zu einer Werkstatt gebracht werden müssen und es können desweiteren auf einfache Art und Weise eine Vielzahl von Zustandsinformationen von einer Mehrzahl von Fahrzeugen erhalten werden, wobei beim Senden einer Untersuchungsanforderung vorzugsweise auch das Untersuchungsprogramm für die Untersuchung gesendet wird. Ein wesentlicher Nachteil dieser Lösung besteht darin, daß hier immer eine Untersuchungsanforderung von außerhalb des Fahrzeuges erfolgen muß, um einen entsprechenden Untersuchungszyklus in Gang zu setzen. Werden die Intervalle zwischen den einzelnen Untersuchungsanforderungen dabei sehr lang gewählt, können Fehler nicht erkannt werden und Funktionszustände auftreten, die zu irreversiblen Schädigungen führen können.

Der Erfindung liegt daher die Aufgabe zugrunde, ein Servicesystem für eine Funktions- oder Antriebskomponente in Antriebssträngen von Fahrzeugen, insbesondere für eine Getriebebaueinheit, derart weiterzuentwickeln, daß die genannten Nachteile vermieden werden. Im einzelnen ist auf die Schaffung eines Servicesystems abzustellen, welches bei Bedarf zu jedem Zeitpunkt neben einer umfassenden Diagnose unabhängig vom Standort des Servicepersonals eine präventive Wartung ermöglicht, das heißt unabhängig von der Vornahme der zyklisch durch das Servicepersonal vorgenommenen Wartung soll bereits bei Ermittlung entsprechender Größen, welche auf einen möglichen Schaden an einer Funktionskomponente oder einer Antriebs- bzw. Funktionskomponente oder einem Element der Antriebskomponente hinweisen, eine Wartung signalisiert werden können.

Die erfindungsgemäße Lösung ist durch die Merkmale der Ansprüche 1 und 24 charakterisiert. Vorteilhafte Ausgestaltungen sind jeweils in den Unteransprüchen wiedergegeben.

Erfindungsgemäß wird ein Servicesystem, umfassend eine Serviceschnittstelleneinrichtung derart ausgeführt, daß die Serviceschnittstelleneinrichtung im Fahrzeug dauerhaft angeordnet ist und Mittel zur Kopplung mit einer Steuereinrichtung, insbesondere einer einer Antriebs- oder einer anderen Funktionskomponente zugeordneten Steuereinrichtung, insbesondere elektronische Steuereinrichtung, zum Auslesen wenigstens einer, die Betriebs- und/oder Funktionsweise der Antriebs- bzw. einer Funktionskomponente wenigstens mittelbar beschreibenden Größe umfaßt,
und die mit der, der Antriebs- oder anderen Funktionskomponenten zugeordneten Steuereinrichtung verbindbar ist und des weiteren Mittel zur drahtlosen Datenübertragung zu einem außerhalb des Fahrzeuges angeordneten Auswert- und/oder Kontroll- und/oder Überwachungssystem oder im Fahrzeug oder außerhalb angeordnten Vermittlungseinrichtung zum Auswert- und/oder Kontroll- und/oder Überwachungssystem aufweist. Unter drahtloser Datenübertragung wird dabei jegliche Art der Übertragung von Daten verstanden, welche nicht an das Vorhandensein einer festen Leitungsverbindung zwischen Sender und Empfänger gebunden ist. Vorzugsweise erfolgt diese jedoch in Form einer Funkübertragung, wobei diese nicht auf bestimmte Technologien fetsgelegt ist. Denkbar ist des weiteren eine Realisierung einer drahtlosen Datenübertragung via Ultraschall, Infrarot. Unter den Begriff Funktionskomponente werden dabei alle Komponenten verstanden, die direkt oder indirekt zur Funktionsfähigkeit eines Systems, beispielsweise eines Antriebsstranges in einem Fahrzeug oder einer stationären Anordnung beitragen. Diese müssen nicht primär der Leistungsübertragung dienen, sondern sind vielmehr für die Aufrechterhaltung bestimmter Funktionen erforderlich. Funktionskomponenten können beispielsweise Nebenaggregate im Antriebsstrang sein, Pumpeinrichtungen oder Ventileinrichtungen in Hydraulikkreisläufen, Filtereinrichtungen etc.
Die Serviceschnittstelleinrichtung bildet im Servicesystem eine universell einsetzbare Komponente zur schnellen und sicheren Datenübertragung, beispielsweise von Meßgrößen über erhebliche räumliche Entfernungen. Aufgrund der allgemeinen Funktionsausrichtung der Aufnahme von Meß- oder bereits verarbeiteten Größen und der drahtlosen Weiterübertragung der Daten ist diese hinsichtlich ihres Einsatzes in Servicesystemen nicht auf eine konkrete Anwendung beschränkt, sondern kann jeder beliebigen Komponente, insbesondere Antriebskomponente oder eine andere Funktion erfüllenden Komponente zugeordnet werden.

Die Serviceschnittstelle wird in Servicesystemen für Komponenten, insbesondere Antriebskomponenten, insbesondere Getriebebaueinheiten, eines Antriebssystems, insbesondere für den Einsatz in Fahrzeugen integriert. Das Servicesystem weist dabei eine der Antriebs- oder Funktionskomponente zugeordnete Steuervorrichtung zur Steuerung der Funktionsweise und/oder Betriebsweise der Antriebs- oder Funktionskomponente, umfassend wenigstens eine Steuereinrichtung, auf. Die Serviceschnittstelleneinrichtung ist dabei der Steuereinrichtung oder mehreren Steuereinrichtungen zugeordnet.

Der Einsatz eines derartigen Servicesystems mit Serviceschnittstelle bietet den Vorteil, daß eine Wartung und/oder Diagnose und/oder Überwachung der Betriebs- und/oder Funktionsweise einer Antriebskomponente unanbhängig von der Anordnung des Auswert- und/oder Kontroll- und/oder Überwachungssystems gegenüber der Funktions- oder Antriebskomponente sicher und schnell bei Bedarf oder ständig am Fahrzeug direkt erfolgen kann, d.h. die Wartung oder Diagnose nicht mehr an das örtliche Verbringen des Auswert- und/oder Kontroll- und/oder Überwachungssystems durch das Servicepersonal zur Antriebskomponente und damit die Anwesenheit des Servicepersonals an der Antriebskomponente gebunden ist. Die Datenübertragung kann dabei über große räumliche Entfernungen erfolgen.

Zur Datenübertragung von der Fahrzeugseite her umfassen die Mittel zur Datenübertragung wenigstens eine Sendeeinrichtung. Über diese kann ein Aufbau der Verbindung bei Vorliegen einer durch die der Antriebskomponente zugeordneten Steuereinrichtung zugeführten Meßgröße oder einer aus derartigen Größen ermittelten Größe oder Größen, welche Wartungsbedarf signalisieren, sichergestellt werden. Vorzugsweise umfassen die Mittel jedoch auch wenigstens eine Empfangseinrichtung, über welche ein Verbindungsaufbau auch vom Auswert- und/oder Kontroll- und/oder Überwachungssystem realisiert werden kann bzw. vom Standort dieses Systemes aus. Unter einem weiteren besonders vorteilhaften Aspekt der Erfindung wird die Funktion der Sende- und Empfangseinrichtung zur Schaffung einer Komponente mit möglichst geringem Bauraumbedarf und hohem Grad an Standardisierung in einer baulichen Einheit zusammengefaßt, welche vorzugsweise als Funktelekommunikationseinrichtung ausgebildet ist.

Bezüglich der Auslösung des Aufbaus einer Verbindung bestehen eine Vielzahl von Möglichkeiten. Denkbar sind eine
a) ständige Verbindung oder
b) eine frei wählbar einstellbare Verbindung oder
c) besonders vorteilhaft eine bei notwendiger Wartung erzwungene Herstellung der Verbindung.

Es werden vorzugsweise die unter b) und c) genannten Möglichkeiten eingesetzt. Im Fall a) erfolgt eine automatische Datenerfassung über die Steuereinrichtung der Funktions- oder Antriebskomponente. Die Datenübertragung erfolgt bidirektional oder quasi bidirektional.

Im letztgenannten Fall erfolgt die Auslösung bei Vorliegen wenigstens einer der nachfolgend genannten Zustände:
- die Funktions- bzw. Antriebskomponente, insbesondere Getriebebaueinheit benötigt eine Wartung, beispielsweise nach Ablauf eines bestimmten Zeitintervalls t
- Zeitweise, willkürlich oder in vordefinierten Zeitintervallen erfolgende Übermittlung von Betriebsdaten von der Steuereinrichtung der Funktions- oder Antriebskomponente, insbesondere der Getriebebaueinheit
- Erkennen von kritischen Betriebszuständen der Funktions- bzw. Antriebskomponente im Vorfeld durch Änderung bestimmter, die Betriebs- und/oder Funktionsweise der Funktions- bzw. Antriebskomponente oder einzelner Elemente der Funktions- bzw. Antriebskomponente beschreibender Größen.
- in einer besonders vorteilhaften Ausgestaltung dem Über- oder Unterschreiten komponentenspezifischer Schwellenwerte, beispielsweise einer bestimmten Anzahl von Betriebszyklen etc.

Im Fall b ist eine Auslösung der Verbindung beispielsweise denkbar bei
- gewünschter vorzunehmender Aktualisierung der Steuersoftware für die Steuervorrichtung, insbesondere die Steuereinrichtung zur Änderung der Betriebsweise der Funktions- oder Antriebskomponente, insbesondere der Getriebebaueinheit durch den Hersteller oder Parametierung der Steuereinrichtung oder
- zeitweiser Abfrage der die Funktionsweise der Funktions- oder Antriebskomponente charakterisierenden Daten durch den Hersteller oder anderer berechtigter Personen,
- Abruf der in der Steuereinrichtung gespeicherte Daten.

Vorzugsweise erfolgt jedoch immer eine Auslösung bei Problemen der Funktion bzw. im Betrieb der Funktions- oder Antriebskomponente, vorzugsweise der Getriebebaueinheit oder der Erkennung von drohendem Ausfall der Funktions- oder Antriebskomponente, beispielsweise bei Vorliegen einer auf einen möglichen Ausfall hinweisenden Größe, wobei diese Größe derart definiert ist, daß ein genügend großer Zeitraum zur Einleitung der Wartungsarbeiten vorhanden ist Diese Möglichkeit der präventiven Wartung bietet den Vorteil, daß Ausfallzeiten für die Wartung oder Reparatur gezielt gesteuert und hinsichtlich der Zeitdauer minimiert werden können.
Das Auswert- und/oder Überwachungs- und/oder Kontrollsystem kann entsprechend der gewünschten Auslösung der Verbindung entweder beim Hersteller der Funktions- oder Antriebskomponente, beim Betreiber des Fahrzeuges oder dem Servicedienstleister oder einer anderen berechtigten Person angeordnet sein. Denkbar ist es jedoch auch, einer Funktions- oder Antriebskomponente mehrere Auswert- und/oder Überwachungs- und/oder Kontrollsysteme zuzuordnen, welche dann Bestandteil des Servicesystems sind und die bei unterschiedlichen Empfängern installiert sein können. Entsprechend der Wahl der Art bzw. Nutzung bestimmter Datenübertragungsdienste können die von seiten des Fahrzeuges, insbesondere durch die Steuereinrichtung der Arttriebskomponente bereitgestellten Meßgrößen dann jedem einzelnen Auswert- und/oder Überwachungs- und/oder Kontrollsystem bei den unterschiedlichen Empfängern gleichzeitig oder aber wahlweise getrennt zugeführt werden. Eine Auslösung der Verbindung durch die Hersteller oder Betrieber oder den Servicedienstleister oder andere berechtigte Personen kann in diesem Fall zusätzlich unabhängig voneinander erfolgen.

Bei Anordnung des Auswert- und/oder Überwachungs- und/oder Kontrollsystems beim Hersteller bestehen für diesen zusätzliche Servicemöglichkeiten, welche als Dienstleistung von ihm anbietbar sind. Dazu gehören:
a) Anregungen zur optimalen Auslegung eines Antriebsstranges in einem Fahrzeug in Abhängigkeit der ermittelten und übertragenen Betriebsgrößen und der gefahrenen Strecke, insbesondere bei Neukauf von Fahrzeugen durch diesen Kunden
b) Erstellen präventiver Wartungs- und Reparaturkonzepte

Diese Dienstleistungen können einzeln unabhängig voneinander oder gemeinsam angeboten werden.

Die Verbindung zwischen Serviceschnittstelleneinrichtung und dem Auswert-und/oder Kontroll- und/oder Überwachungssystem kann undirektional, bidirektional oder quasi bidirekional ausgestaltet sein.

Bezüglich der Realisierung der Kopplung zwischen Serviceschnittstelleneinrichtung und Steuereinrichtung bestehen ebenfalls eine Vielzahl von Möglichkeiten. Diese hängen dabei unter anderem von der Anordnung der Serviceschnittstelleneinrichtung gegenüber der Funktions-oder Antriebskomponente und/oder der der Funktions- oder Antriebskomponente zugeordneten Steuereinrichtung ab. Die Serviceschnittstelleneinrichtung kann dabei
a) in die Steuereinrichtung der Funktions- oder Antriebskomponente integriert sein oder
b) in unmittelbarer räumlicher Nähe zur Funktions- oder Antriebskomponente bzw. der dieser zugeordneten Steuereinrichtung angeordnet werden oder
c) in räumlich weiterer Entfernung zur Funktions- oder Antriebskomponente angeordnet werden.

In einer besonders vorteilhaften Ausgestaltung wird eine räumlich sehr nahe Anordnung oder die Integration der Serviceschnittstelleinrichtung in der Steuereinrichtung gewählt. Bei diesen beiden Möglichkeiten der Anordnung werden die zur Verbindung erforderlichen Kabel- bzw. Leitungswege erheblich minimiert. Ein wesentlicher Vorteil einer derartigen räumlich nahen Anordnung oder der Integration besteht darin, daß keine separate Aufhängung für die Serviceschnittstelleneinrichtung im Fahrzeug vorzusehen ist, sondern die der Steuereinrichtung der Funktions- oder Antriebskomponente mit genutzt werden kann. In den Fällen b) und c) besteht zudem fortlaufend die Möglichkeit die Serviceschnittstelle auch anderen Funktions- oder Antriebskomponenten zuzuordnen.

Die Verbindung zwischen Serviceschnittstelleneinrichtung und Steuereinrichtung kann über parallele oder serielle Datenübertragungsmittel erfolgen. Im letztgenannten Fall beispielsweise via CAN-Busleitung.

Vorzugsweise erfolgt die Datenübertragung über die Gesamtstrecke zwischen Serviceschnittstelleneinrichtung und Auswert- und/oder Überwachungs-und/oder Kontrollsystem drahtlos. Denkbar ist jedoch auch, um beispielsweise den Zugriff auf die mit der Serviceschnittstelle weitergeleiteten Daten empfängerunabhängig zu gestalten, eine Unterteilung der Gesamtübertragungsstrecke in Teilübertragungsstrecken unter Nutzung wenigstens einer Vermittlungseinrichtung. In diesem Fall erfolgt wenigstens die Datenübertragung auf der ersten Teilübertragungsstrecke zwischen der Serviceschnittstelleneinrichtung und der Vermittlungseinrichtung drahtlos. Die Vermittlungseinrichtung kann dabei beispielsweise
a) bei einem neutralen Vermittler oder
b) dem Betreiber oder
c) dem Hersteller oder
d) dem Servicedienstleister oder
e) einer anderen berechtigten Person
gebildet werden.

Denkbar ist ohnehin die erste, drahtlose Teilübertragungsstrecke als Blue Tooth-Verbindung ausgeführt. Unter der Blue-Tooth-Technologie wird dabei eine globale drahtlose Kommunikationsmöglichkeit von Daten und Sprache verstanden. Bezüglich der Technologie wird auf http:\\www.bluetooth.com/v2/document/default.asp vom 28. Oktober 1999 verwiesen der Offenbargehalt dieser Webseite bezüglich der Technologie wird hiermit vollumfänglich in die Anmeldung mit einbezogen. Die Vermittlungseinrichtung kann dabei beispielsweise als
a) Telekommunikationsanlage
b) Funktelekommunikationsanlage
c) Mikroprozessor mit entsprechender integrierter oder zu geordneter Sende- und Empfangseinrichtung und wahlweise Speichereinheit zur Zwischenspeicherung von Daten
ausgeführt sein.

Die drahtlose Datenübertragung ist nicht auf eine bestimmte Technologie festgelegt.

Die erfindungsgemäße Lösung wird nachfolgend anhand von Figuren erläutert. Darin ist im einzelnen folgendes dargestellt:
Figur 1 verdeutlicht in schematisch stark vereinfachter Darstellung den Grundaufbau einer Serviceschnittstelleneinrichtung für ein erfindungsgemäßes Servicesystem;
Figur 2 verdeutlicht die grundlegende Funktionsweise eines erfindungsgemäß gestalteten Servicesystems;
Figuren 3a bis 3d zeigen Möglichkeiten der Gestaltung einer Gesamtübertragungsstrecke;
Figuren 4a bis 4c verdeutlichen Anordnungsmöglichkeiten der Servicescnittstelleneinrichtung.

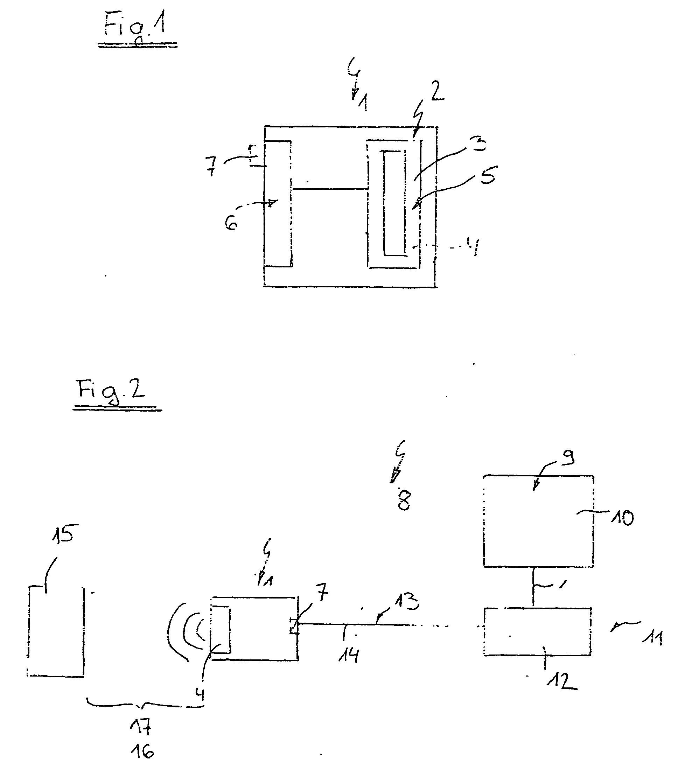

Die Figur 1 verdeutlicht in schematisch stark vereinfachter Darstellung den Grundaufbau einer Serviceschnittstelleneinrichtung 1 für ein erfindungsgemäß gestaltetes Servicesystem mit Mitteln 2 zur drahtlosen Datenübertragung, umfassend wenigstens eine Sendeeinrichtung 3. Unter drahtloser Datenübertragung wird dabei jegliche Art der Datenübertragung verstanden, welche frei von einer festen Verkabelung zwischen Sender und Empfänger ist. Eine derartige Übertragung erfolgt vorzugsweise als Funkübertragung. Denkbar ist jedoch auch die Übertragung via Infrarot oder Ultraschall. Vorzugsweise ist des weiteren neben einer Sendeeinrichtung 3 eine Empfangseinrichtung 4 vorgesehen, wobei beide Einrichtungen hinsichtlich ihrer Funktion in einer Baueinheit zusammengefaßt sein können, im dargestellten Fall in Form einer Telekommunikationseinrichtung 5, wobei dieses vorzugsweise als GSM-Endgerät oder Telefon (Global System for Mobile communication-Telefon) ausgeführt ist. Unter Telekommunikation wird dabei Kommunikation zwischen Menschen, Maschinen und anderen Systemen mit Hilfe von nachrichtentechnischen Übertragungsverfahren verstanden. Kommunikationsformen sind Sprache, Texte, Bild- und Datenkommuniktaion. Die Serviceschnittstelleneinrichtung 1 umfaßt des weiteren Mittel 6 zur Datenaufnahme und Übermittlung an die Mittel 2 zur drahtlosen Datenübertragung. Die Mittel 6 zur Datenaufnahme umfaßt dabei wenigstens eine Anschlußeinrichtung 7, welche mittels weiteren, hier nicht dargestellten Mitteln zur Datenübertragung mit einer, einer Antriebskomponente oder einer anderen beliebigen Funktionskomponente zugeordneten Steuereinrichtung koppelbar ist Über die Anschlußeinrichtung 7 sind der Serviceschnittstelleneinrichtung 1 Daten der Steuereinrichtung der Funktions- oder Antriebskomponente oder Antriebskomponenten zuführbar, wobei diese entweder unbearbeitet in der erfaßten Form über die Mittel 2 zur drahtlosen Datenübertragung an eine Auswerteinrichtung drahtlos übertragen werden können oder aber bereits in der Serviceschnittstelleneinrichtung 1 eine Verarbeitung vor der Weiterleitung an entsprechende Auswertsysteme erfahren.

Das Grundprinzip der Funktionsweise eines erfindungsgemäß gestalteten Servicesystems 8 für eine Antriebskomponente 9, insbesondere einer Getriebebaueinheit 10 wird in stark schematisierter und vereinfachter Darstellung in der Figur 2 erläutert. Das Servicesystem 8 für eine Antriebs- bzw. Funktionskomponente 9, insbesondere die Getriebebaueinheit 10 umfaßt wenigstens eine, der Getriebebaueinheit 10 zugeordnete Steuervorrichtung 11, umfassend wenigstens eine elektronische Steuereinrichtung 12. Die Steuereinrichtung 12 wird dabei in der Regel auch als Steuergerät bezeichnet und beinhaltet die elektrischen und elektronischen Bauelemente, welche die die Betriebs- und/oder Funktionsweise der Getriebebaueinheit 10 wenigstens mittelbar charakterisierenden Größen und/oder die zur Änderung der Betriebsweise der Getriebebaueinheit erforderlichen Größen verarbeiten und die entsprechenden Stellgrößen für die Ansteuerung der einzelnen Stelleinrichtungen der Getriebebaueinheit zur Beeinflussung der Funktionsweise der Getriebebaueinheit 9 bildet. Die Serviceschnittstelleneinrichtung 1 ist dabei mit der Steuervorrichtung 11, vorzugsweise der Steuereinrichtung 12, koppelbar. Diese Kopplung 13 erfolgt vorzugsweise elektronisch, wobei diese vorzugsweise über Mittel 14 zur seriellen Datenübertragung zwischen der Getriebebaueinheit 10, insbesondere der Steuereinrichtung 12 der Getriebebaueinheit 10 und der Serviceschnittstelleneinrichtung 1 realisiert wird. Denkbar ist auch der Einsatz von Mitteln zur parallelen Datenübertragung. In diesem Fall sind jedoch eine Mehrzahl von festen Leitungsverbindungen zwischen der Steuereinrichtung 12 und der Serviceschnittstelleneinrichtung 1 erforderlich, welche eine Vielzahl von Anschlußeinrichtungen 7 an der Serviceschnittstelleneinrichtung 1 erfordern. Über die Kopplung 13 zwischen der Steuervorrichtung 11 beziehungsweise der Steuereinrichtung 12 und der Schnittstelleneinrichtung 1 können die zur Diagnose beziehungsweise Wartung oder Überwachung der Funktionsweise der Getriebebaueinheit erforderlichen Größen der Serviceschnittstelleneinrichtung 1 zur Verfügung gestellt werden, von welcher diese an entsprechende Auswert- und/oder Überwachungs- und/oder Kontrollsysteme 15 oder zwischengeordnete, hier nicht dargestellte Vermittlungseinrichtungen drahtlos übermittelt werden. Bei den zu übermittelnden Größen kann es sich dabei um wenigstens eine, der nachfolgend genannten Größen handeln:
- Größen, welche die Betriebsweise der Funktions- oder Antriebskomponente 9, insbesondere der Getriebebaueinheit 10 wenigstens mittelbar charakterisieren
- Größen, welche den Wunsch nach Änderung der Funktionsweise der Funktions- oder Antriebskomponente 9, insbesondere der Getriebebaueinheit 10 wenigstens mittelbar charakterisieren
- Größen, welche die Änderung der Funktionsweise der Funktions-oder Antriebskomponente 9, insbesondere Getriebebaueinheit 10 wenigstens mittelbar charakterisieren
- Größen, welche die Funktionsweise und/oder den Zustand einzelner Elemente der Funktions- oder Antriebskomponente 9, insbesondere der Getriebebaueinheit 10 wenigstens mittelbar beschreiben.

Das Auswert- und/oder Überwachungs- und/oder Kontrollsystem 15 ist dabei in räumlicher Entfernung zur Serviceschnittstelleneinrichtung 1 beziehungsweise der Funktions- oder Antriebskomponente 9 angeordnet. Bei diesem kann es sich je nach Einsatzbedingung oder Anwendungsbereich der Antriebskomponente beispielsweise um ein in den Wirkungsbereich des Herstellers der Antriebskomponente oder des Betreibers des Fahrzeuges fallendes System handeln. Aufgrund der Möglichkeit der drahtlosen Datenübertragung ist es möglich, erhebliche Übertragungswege zu überbrücken, weshalb an den Standort des Auswert- und/oder Überwachungs- und/oder Kontrollsystems 15 keine besonderen Anforderungen zu stellen sind. Vorzugsweise ist dieses beim Hersteller der Antriebskomponente angesiedelt. Denkbar ist es jedoch auch, je nach Einsatzfall, beispielsweise beim Einsatz in Speditionen diese Systeme im Flottenmanagement zu integrieren oder diese Systeme beim Servicepersonal zu plazieren, wobei die Möglichkeiten der Datenfernübertragung optimal genutzt werden können. Mit dieser Grundkonfiguration können eine Vielzahl von unterschiedlichen Aufgaben gelöst werden. Die optimale Realisierung erfordert dann je nach Einsatzfall eine entsprechende Ausgestaltung der physikalischen und logischen Verbindung, insbesondere für den Aufbau einer Gesamtübertragungsstrecke 17 von der Schnittstelleneinheit 1 zum entsprechenden Auswert- und/oder Überwachungs- und/oder Kontrollsystem 15. Der Verbindungsaufbau erfolgt vorzugsweise nicht fortlaufend sondern nur entsprechend des Bedarfes. Dieser kann auf unterschiedliche Weise charakterisiert werden. Denkbar ist dabei die Auslösung des Verbindungsaufbaus abhängig von wenigstens einer, den Zustand einer erforderlichen Wartung oder Diagnose der Komponente, insbesondere Funktions- oder Antriebskomponente 9 wenigstens mittelbar beschreibenden Größe oder unabhängig von einer erforderliche Wartung zu beliebigen Zeitpunkten.

Im erstgenannten Fall erfolgt die Auslösung bei Vorliegen wenigstens einer der nachfolgend genannten Zustände:
a) die Funktions- oder Antriebskomponente, insbesondere Getriebebaueinheit benötigt eine Wartung, beispielsweise nach Ablauf eines bestimmten Zeitintervalls t
b) bei Übermittlung von Betriebsdaten von der elektronischen Steuereinrichtung 12 der Funktions- oder Antriebskomponente 9, insbesondere der Getriebebaueinheit 10
c) Erkennen von kritischen Betriebszuständen der Funktions- oder Antriebskomponente im Vorfeld durch Änderung bestimmter, die Betriebs- und/oder Funktionsweise der Funktions- oder Antriebskomponente oder einzelner Elemente der Funktions- oder Antriebskomponente beschreibender Größen

Im zweiten Fall ist eine Auslösung der Verbindung beispielsweise denkbar bei
d) Aktualisierung der Steuersoftware für die Steuervorrichtung 11, insbesondere die Steuereinrichtung 12 zur Änderung der Betriebsweise der Funktions- oder Antriebskomponente 9, insbesondere der Getriebebaueinheit 10 durch den Hersteller oder anderer berechtigter Personen oder
e) zeitweiser Abfrage der die Funktionsweise der Funktions- oder Antriebskomponente charakterisierenden Daten durch den Hersteller.

Der unter a) beschriebene Fall kann dabei beispielsweise durch eine der nachfolgend genannten Größen charakterisiert werden:
- Ablauf einer vordefinierten Zeitdauer t, welche als Wartungsintervall definiert ist, und die die Abstände zwischen zwei Wartungsdurchgängen definiert;
- Vorliegen einer, die Funktionsweise und/oder die Betriebsweise eines Getriebeelementes wenigstens mittelbar charakterisierenden Größe, welche außerhalb des Normalbereiches liegt;
- Änderung der vom Getriebesteuergerät, das heißt der Steuereinrichtung 12 der Getriebebaueinheit 10 übermittelten Betriebsdaten.

Vorzugsweise wird jedoch eine Auslösung bei Problemen der Leistungsübertragung über die entsprechende Antriebskomponente, vorzugsweise die Getriebebaueinheit 10 oder Funktionsweise der Funktionskomponente oder der Erkennung von drohendem Ausfall der Funktions- oder Antriebskomponente 9 angestrebt.

Die andere Möglichkeit besteht darin, eine Datenübertragung zwischen der Schnittstelleneinheit 1 und dem Auswert- und/oder Überwachungs- und/oder Kontrollsystem 15 jeweils nur auf ausdrücklichen Wunsch des Herstellers durch das Vorliegen einer entsprechenden, auf die Herstellung der Verbindung abzielenden Größe, beispielsweise eines entsprechenden Rufsignales für die Telekommunikationseinrichtung 5 auszulösen.

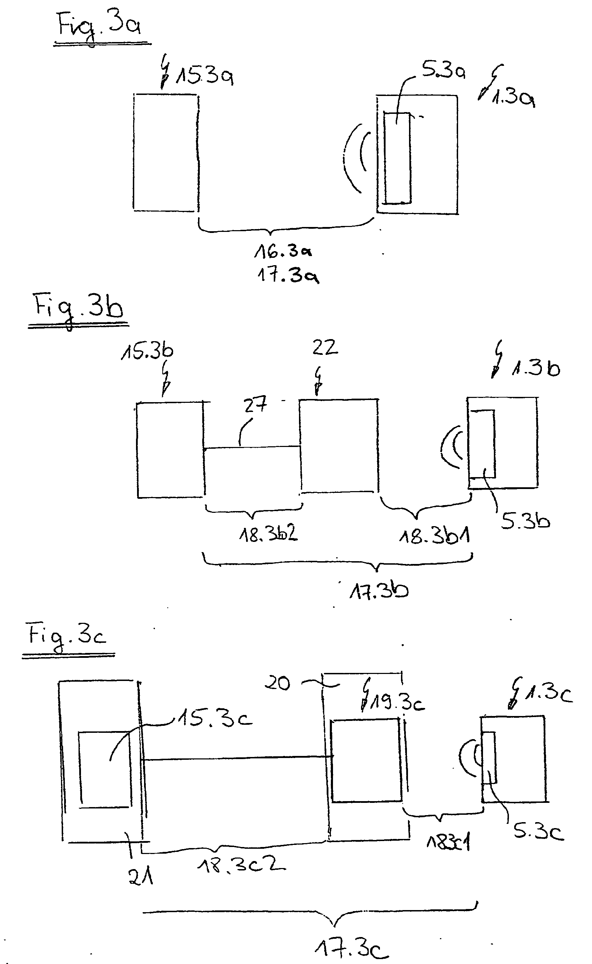

Die Verbindung zwischen dem Auswert- und/oder Überwachungs- und/oder Kontrollsystem 15 und der Schnittstelleneinheit 1 erfolgt über die Übertragungsstrecke 16, welche in der Figur 2 gleichzeitig die Gesamtübertragungsstrecke 17 bildet, drahtlos, d.h. ohne feste Leitungsverbindung zwischen Serviceschnittstelleneinrichtung 1 und dem Auswert- und/oder Überwachungs- und/oder Kontrollsystem 15. Als Übertragungsstrecke 16 kann dabei jegliche beliebige Entfernung angesehen werden, wobei entsprechend der gewählten Entfernung ein entsprechendes Übertragungsnetz vorhanden sein sollte. Die Übertragungsstrecke 16 zur drahtlosen Datenübertragung bildet dabei entweder, wie in der Figur 2 dargestellt, die Gesamtübertragungsstrecke 17 oder wenigstens einen Teilbereich in Form einer Teilstrecke 18. Die entsprechenden Datenübertragungsmöglichkeiten sind in den Figuren 3a bis 3d verdeutlicht. Entscheidend ist lediglich, daß von der Serviceschnittstelleinrichtung 1 die Daten drahtlos versendet werden.

In den Figuren 3a bis 3d sind jeweils in stark vereinfachter Darstellung die Schnittstelleneinheiten 1.3a bis 1.3d und die Auswert- und/oder Überwachungs- und/oder Kontrollsysteme 15.3a bis 15.3d wiedergegeben. Die Gesamtübertragungsstrecke ist in den einzelnen Figuren jeweils mit 17.3a bis 17.3d gekennzeichnet.

Die Figur 3a verdeutlicht eine Ausführung der Gesamtübertragungsstrecke 17.3a , bei welcher die gesamte Übertragungsstrecke 17.3a von einer drahtlosen Übertragungsstrecke 16.3a gebildet wird. Dies wird beispielsweise über eine direkte Funktelefonverbindung via GSM-Telekommunikationseinrichtung 5.3a realisiert. Bei dieser Art der Verbindung handelt es sich um ein durchschaltvermitteltes Übertragungsverfahren, bei dem ein Übertragungskanal zwischen den beiden Teilnehmern, hier dem Auswert- und/oder Überwachungs- und/oder Kontrollsystem 15.3a und der Serviceschnittstelleneinrichtung 1.3a fest aufgebaut wird. Eine weitere Möglichkeit zur Ausführung dieser drahtlosen Direktverbindung besteht in der Nutzung von paketvermittelten Diensten, beispielsweise dem sogenannten GPRS oder UMTS oder Mobilfunk im Allgemeinen. Jede Technologie ist denkbar. Bei diesem kann desweiteren zwischen verbindungsorientierten und verbindungslosen Diensten unterschieden werden. Bei den verbindungslosen Diensten, welche auch als Datagramm-Dienste bezeichnet werden, wird in jedem Paket die vollständige Adresse des Empfängers und Absenders - entsprechend der gewählten Auslösekriterien der Adresse des Auswert-und/oder Überwachungs- und/oder Kontrollsystems 15.3a und der Serviceschnittstelleneinrichtung 1.3a als Sender oder Empfänger abgelegt und unabhängig von den anderen Paketen durch das Netz geschleust. Dabei können die einzelnen Datenpakete zwischen dem Auswert- und/oder Überwachungs- und/oder Kontrollsystem 15.3a und der Schnittstelleneinrichtung 1.3a im Netz unterschiedliche Wege gehen und sich sogar überholen. Bei den verbindungsorientierten Diensten ist der Übertragungsweg für die Dauer der logischen Verbindung fest vorgegeben. Diese bedingt jedoch einen entsprechenden Verwaltungsaufwand, bietet jedoch den Vorteil, daß die Reihenfolge der übertragenden Pakete gesichert ist und dem Anmelder die Möglichkeit geboten wird, die Dienstqualität beim Verbindungsaufbau zu bestimmen.
Die zur Verfügung stehende Übertragungsrate wird bei paketvermittelten Diensten, wie beispielsweise GPRS, von allen Teilnehmern in einer Funkzelle geteilt. Dies bedeutet, daß ein Teilnehmer die Funkstrecke nur dann belegt, wenn wirklich Pakete übertragen werden. Ansonsten kann diese Funkstrecke von anderen Teilnehmern verwendet werden.

Bei den von GPRS unterstützten Diensten wird zwischen den nachfolgend genannten. Diensten unterschieden:
a) Point-to-Point-Diensten (PTP) und
b) Point-to-Multipoint Diensten (PTM).

Die PTP-Dienste unterstützen dabei die Übertragung eines oder mehrerer Pakete zwischen zwei Benutzern, das heißt im dargstellten Fall dem Auswert-und/oder Überwachungs- und/oder Kontrollsystem 15.3a und der Serviceschnittstelleneinrichtung 1.3a. Die Übertragung kann dabei verbindungslos oder verbindungsorientiert erfolgen. Die verbindungslosen GPRS-Dienste sind dabei konsistent zu ISO 8348. Laut Standard werden durch die paketvermittelten Übertragungssysteme alle Applikationen, die auf dem Internet-Protokoll der TCP/IP-Protokollfamilie basieren, unterstützt. Verbindungsorientierte GPRS-Dienste stellen eine logische Beziehung zwischen den beiden Benutzem - hier dem Auswert- und/oder Überwachungs-und/oder Kontrollsystem 15.3a und der Serviceschnittstelleneinrichtung 1.3a her, über weiche die Datenübertragung erfolgt, diese sind ebenfalls konsistent zu ISO 8348.

PTM-Dienste unterstützen die Übertragung von einem Absender zu einer Empfängergruppe, die sich zu einer bestimmten Zeit in einem vorgegebenen geographischen Gebiet befindet. Jeder GPRS-Teilnehmer hat dabei die Möglichkeit, sich für eine oder mehrere Teilnehmergruppen registrieren zu lassen. Diese Gruppen sind dann entweder entsprechenden Dienstanbietem oder Applikationen zugeordnet. In der Regel werden dabei folgende zwei Arten von PTM-Dienste unterschieden:
a) PTM-Multicast (PTM-M)
b) PTM-Groupcall (PTM-G).

Bei PTM-Multicast-Diensten werden die Daten in alle vom Absender angegebenen Gebiete übertragen. Die Datenübertragung erfolgt entweder an alle Empfänger in diesen Gebieten oder nur an die angegebenen Teilnehmergruppen. Beim PTM-Graupcall werden die Daten nur an eine spezielle Teilnehmergruppe gesendet und zwar nur in denjenigen Zellen eines geographischen Gebietes, in denen sich Teilnehmer der Gruppe befinden. Dies bedeutet, daß dem Netz, anders als bei PTM-M, alle Teilnehmer der Gruppe, die sich zum Sendezeitpunkt innerhalb des Gebietes befinden, bekannt sein müssen. Das geographische Gebiet wird bei PTM-G vom Absender des Gruppenrufes für alle Datenübertragungen, die sich auf diesen Ruf beziehen, festgelegt. Diese Möglichkeit der Dienste bietet dann den Vorteil, wenn mehrere Hersteller oder andere berechtigte Personen in die Wartung von Funktions- oder Antriebskomponenten einbezogen sind. Dies ist insbesondere auch dann wünschenswert, wenn beispielsweise neben dem Hersteller der Funktions- oder Antriebskomponente der Eigner des Fahrzeuges ebenfalls entsprechende Diagnose- und Wartungsleistungen erbringt.

Die Figur 3b verdeutlicht eine weitere Ausführung zur Realisierung der physikalischen Verbindung zwischen der Serviceschnittstelleneinrichtung 1.3b und des Auswert- und/oder Überwachungs- und/oder Kontrollsystems 15.3b. Dabei wird die gesamte Übertragungsstrecke 17.3b aus zwei Teilübertragungsstrecken 18.3b1 und 18.3b2 gebildet. Die Teilübertragungsstrecke 18.3b1 wird dabei durch eine Internetverbindung über GSM 5.3b charakterisiert und die Teilübertragungsstrecke 18.3b2 beispielsweise über das herkömmliche Telefonnetz, d.h. mit fester Leitungsverbindung 27. Zwischengeschaltet zwischen die Teilübertragungsstrecken 18.3b1 und 18.3b2 ist dabei eine entsprechende Vermittlungseinrichtung 22, welche eine entsprechende Sende- und Empfangseinrichtung umfaßt.

In beiden Fällen kann sich dabei das Auswert- und/oder Überwachungs-und/oder Kontrollsystem 15 entweder beim Hersteller der Antriebskomponente oder der Betreibereinrichtung des Fahrzeuges und/oder des beauftragten Diagnosedienstleisters befinden.

Die Figuren 3c und 3d verdeutlichen jeweils in schematisch vereinfachter Darstellung weitere Möglichkeiten der Datenübertragung in einer Gesamtübertragungsstrecke 17, welche sich aus mehreren Teilstrecken 18 zusammensetzt, wobei jeweils nur über eine Teilstrecke eine Funkverbindung vorgesehen ist. Gemäß der Figur 3c ist zwischen der ersten Teilstrecke 18.3c1 und der zweiten Teilstrecke 18.3c2 eine Zwischenvermittlungseinrichtung 19.3c vorgesehen. Dabei erfolgt die Datenübertragung über die erste Teilstrecke 18.3c1 zur Zwischeneinrichtung 19.3c, welche beispielsweise beim Betreiber des Fahrzeuges, insbesondere dem Verkehrsbetrieb, stationiert ist. Über die Zwischeneinrichtung 19.3c wird die Verbindung über die Übertragungsstrecke 18.3c2 beispielsweise über eine herkömmliche verkabelte Telefoneinrichtung oder ein Internet-Gateway realisiert. Eine Datenübertragung per Funk ist ebenfalls denkbar. Diese Teilübertragungsstrecke 18.3c2 besteht dann zwischen dem Betreiber, insbesondere dem Verkehrsbetrieb und dem Hersteller der Funktions- oder Antriebskomponente. Der Betreiber beziehungsweise der Verkehrsbetrieb ist hier mit 20 und der Hersteller mit 21 bezeichnet. Das Auswert- und/oder Überwachungs- und/oder Kontrollsystem 15.3c ist dabei vorzugsweise beim Hersteller der Funktions- oder Antriebskomponente 9 angesiedelt

Eine weitere Möglichkeit besteht darin, die Zwischeneinrichtung 19.3d entsprechend der Figur 3d bei einem neutralen Vermittler 28 zu arrangieren, wobei sich bei diesem Vermittler 28 um eine zentrale Basisstation handeln kann, als welche beispielsweise ein Bahnhof, Busbahnhof oder ein anderer Meetingpoint angesehen werden kann, wobei die Datenübertragung zwischen der Schnittstelleneinheit 1.3d und dem Vermittler 28 drahtlos über die erste Teilstrecke 18.3d1 und vom Vermittler 28 entweder ebenfalls drahtlos oder aber über eine entsprechende Verbindungsleitung über die Teilübertragungsstrecke 18.3d2 mit dem Hersteller 21 und/oder einem anderen, die Diagnose beziehungsweise die Überwachung der Antriebskomponente vomehmenden Unternehmens realisiert wird.

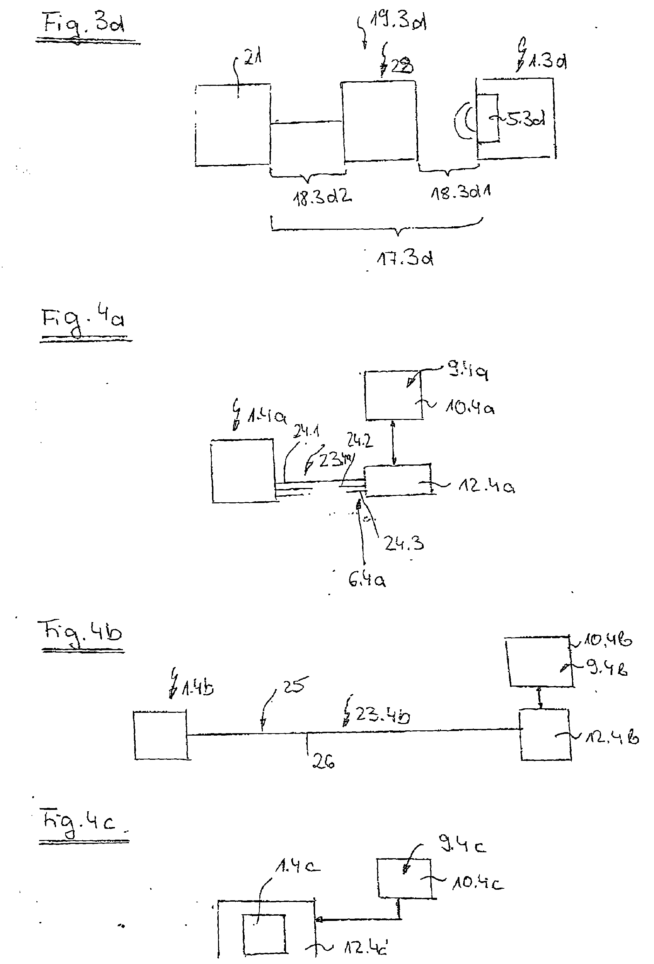

Die Figuren 4a bis 4c verdeutlichen in schematisch vereinfachter Darstellung die Möglichkeiten der Zuordnung der Serviceschnittstelleneinrichtung 1.4a bis 1.4c zur Steuervorrichtung 11.4a bis 11.4c beziehungsweise der Steuereinrichtung 12.4a bis 12.4c der Komponenten, insbesondere Funktions-oder Antriebskomponenten 9.4a bis 9.4c, insbesondere der Getriebebaueinheiten 10.4a bis 10.4c.

Die Figur 4a verdeutlicht eine, einer Antriebskomponente 9.4a zugeordnete Steuereinrichtung 12.4a. Diese Serviceschnittstelleneinrichtung 1.4a ist dabei in räumlicher Nähe zur Steuereinrichtung 12.4a angeordnet. Die physikalische Verbindung 23.4a zwischen der Steuereinrichtung 12.4a und der Serviceschnittstelleneinrichtung 1.4a erfolgt über entsprechende Mittel 6 zur Datenaufnahme und Übermittlung an die Mittel zur Datenübertragung. Bei diesen handelt es sich entweder um Mittel zur seriellen Datenübertragung oder parallelen Datenübertragung. Je nach gewünschter Ausführung der Datenübertragung sind dabei eine Vielzahl von Verbindungen bei paralleler Datenübertragung oder einige wenige Leitungen zur seriellen Datenübertragung erforderlich. Im dargestellten Fall umfassen die Mittel 6.4a eine Mehrzahl von Leitungen 24.1 bis 24.n zur parallelen Datenübertragung.

Dem gegenüber offenbart die Figur 4b eine Ausführung mit räumlich entfernter Anordnung der Serviceschnittstelleneinrichtung 1.4b von der Steuereinrichtung 12.4b der Steuervorrichtung 11.4b der Getriebebaueinheit 10.4b. In diesem Fall kann die Serviceschnittstelleneinrichtung 1.4b an beliebiger Stelle im Fahrzeug angeordnet werden. Die physikalische Kopplung 23.4b zwischen der Serviceschnittstelleneinrichtung 1.4b und der Steuereinrichtung 12.4b erfolgt dabei vorzugsweise über Mittel zur seriellen Datenübertragung in Form einer sogenannten CAN-Schnittstelle, umfassend wenigstens eine Leitung 26.

Die Figur 4c verdeutlicht eine Ausführung eines Servicesystems, bei welchem die Schnittstelleneinheit 1.4c in der Steuereinrichtung 12.4c integriert ist.

Die in den Figuren 1 bis 4 dargestellten Ausführungen stellen vorteilhafte, nicht abschließende Beispiele dar. Für die konkrete Ausgestaltung des Servicesystems 8, insbesondere der Realisierung der physikalischen und logischen Verbindungen zwischen den einzelnen Elementen, Steuervorrichtung 11, insbesondere Steuereinrichtung 12, Serviceschnittstelleneinrichtung 1 und Auswert- und/oder Überwachungs-und/oder Kontrollsystem 15 bestehen dabei eine Vielzahl von Möglichkeiten, welche entsprechend dem konkreten Einsatzerfordemis ausgestaltet werden. Erfindungswesentlich ist das Vorsehen der Serviceschnittstelleneinrichtung 1, welche Mittel zur drahtlosen Datenübertragung 2 aufweist, die eine Datenübertragung über beliebig weite Übertragungsstrecken drahtlos ermöglichen.

### Bezugszeichenliste

- 1, 1.3a, 1.3b; 1.3c, 1.3d, 1.4a, 1.4b, 1.4c: Serviceschnittsielleneinrichtung
- 2: Mittel zur drahtlosen Datenübertragung
- 3: Sendeeinrichtung
- 4: Empfangseinrichtung
- 5: Telekommunikationsenrichtung
- 6: Mittel zur Datenaufnahme und Übermittlung an die Mittel 2 zur Datenübertragung
- 7: Anschlußeinrichtung
- 8: Servicesystem
- 9, 9.4a, 9.4b, 9.4: Funktions- oder Antriebskomponente
- 10, 10.4a, 10.4b, 10.4c: Getriebebaueinheit
- 11: Steuervorrichtung
- 12, 12.4a, 12.4b, 12.4c: Steuereinrichtung
- 13: elektronische Kopplung
- 14: Mittel zur seriellen Datenübertragung
- 15, 15.3a, 15.3b, 15.3c, 15.3d: Auswert- und/oder Überwachungs- und/oder Kontrollsystem
- 16: Übertragungsstrecke
- 17, 17.3a, 17.3b, 17.3c, 17.3d: Gesamtübertragungsstrecke
- 18, 18.3b1, 18.3b2, 18.3c1, 18.3c2, 18.3d1, 18.3d2: Teilübertragungsstrecke
- 19.3c, 19.3d: Zwischeneinrichtung
- 20: Betreiber
- 21: Hersteller
- 22: Vermittlungseinrichtung
- 23.4a, 23.4b, 23.4c: Physikalische Kopplung
- 24.1 bis 24.n: Leitungen
- 25: Mittel zur seriellen Datenübertragung
- 26: Leitung
- 27: Leitungsverbindung
- 28: neutraler Vermittler

## Patentansprüche

1. Servicesystem (8) für eine Komponente, insbesondere Funktions-oder Antriebskomponente (9; 9.4a, 9.4b, 9.4c), insbesondere eine Getriebebaueinheit (10; 10.4a, 10.4b, 10.4c) eines Antriebssystems in Fahrzeugen;
1.1 mit einer außerhalb des Fahrzeuges angeordneten Auswert-und/oder Überwachungs- und/oder Kontrollsystems (15; 15.3a, 1.53b, 15.3c, 15.3d);
1.2 mit einer der Komponente, insbesondere der Funktions- oder Antriebskomponente (9; 9.4a, 9.4b, 9.4c) zugeordneten Steuervorrichtung (11) zur Steuerung der Funktionsweise und/oder Betriebsweise der Komponente, insbesondere der Funktions- oder Antriebskomponente (9; 9.4a, 9.4b, 9.4c), umfassend wenigstens eine Steuereinrichtung (12; 12.4a, 12,4b, 12.4c);
1.3 mit einer der Steuereinrichtung (12; 12.4a, 12.4b, 12.4c) im Fahrzeug zugeordneten und dauerhaft installierten Serviceschnittstelleneinrichtung (1, 1.3a, 1.3b, 1.3c, 1.3d; 1.4a, 1.4b, 1.4c) umfassend Mittel (6) zur Kopplung mit einer der Komponente (9; 9.4a, 9.4b, 9.4c) zugeordneten Steuereinrichtung insbesondere elektronischen Steuereinrichtung (12; 12.4a, 12.4b, 12.4c) zum Auslesen wenigstens einer, die Betriebs- und/oder Funktionsweise der Komponente (9; 9.4a, 9.4b, 9.4c) wenigstens mittelbar beschreibenden Größe;
1.4 mit Mitteln (2) zur drahtlosen Datenübertragung an ein Auswert-und/oder Überwachungs- und/oder Kontrollsystem (15; 15.3a, 15.3b, 15.3c, 15.3d) oder eine dieser hinsichtlich der Datenübertragung vorgeordneten Vermittlungseinrichtung (22).

2. Servicesystem (8) nach Anspruch 1, **dadurch gekennzeichnet, daß** die Mittel (2) zur drahtlosen Datenübertragung wenigstens eine Sendeeinrichtung (3) umfassen.

3. Servicesystem (8) nach Anspruch 1 oder 2, **dadurch gekennzeichnet, daß** die Mittel (2) zur drahtlosen Datenübertragung eine Empfangseinrichtung (4) umfassen.

4. Servicesystem (8) nach Anspruch 1 bis 3, **dadurch gekennzeichnet, daß** die Mittel (2) von einer Funktelekommunikationseinrichtung (5) gebildet werden.

5. Servicesystem (8) nach einem der Ansprüche 1 bis 3, **dadurch gekennzeichnet, daß** die Sende- und/oder Empfangseinrichtung zur Verarbeitung und/oder Übertragung von Ultraschallsignalen ausgebildet sind.

6. Servicesystem (8) nach einem der Ansprüche 1 bis 3, **dadurch gekennzeichnet, daß** die Sende- und/oder Empfangseinrichtung zur Verarbeitung und/oder Übertragung von Infrarotsignalen ausgebildet sind.

7. Servicesystem (8) nach einem der Ansprüche 1 bis 6, **dadurch gekennzeichnet, daß** die Mittel (6) zur Kopplung mit einer der Komponente, insbesondere Funktions- oder Antriebskomponente (9; 9.4a, 9.4b, 9.4c) zugeordneten Steuereinrichtung (12; 12.4a, 12.4b, 12.4c) zum Auslesen wenigstens einer, die Betriebs- und/oder Funktionsweise der Komponenten, insbesondere Funktions- oder Antriebskomponente (9; 9.4a, 9.4b, 9.4c) wenigstens mittelbar beschreibenden Größe wenigstens eine Anschlußeinrichtung (7) für Leitungen (24.1, 24.2, 24.n; 26) zur parallelen oder seriellen Datenübertragung umfassen.

8. Servicesystem (8) nach Anspruch 7, **dadurch gekennzeichnet, daß** die Leitungen (24.1, 24.2, 24.n; 26) zur parallelen oder seriellen Datenübertragung Bestandteil der Mittel (6) zur Kopplung der Serviceschnittstelleneinrichtung (1) mit einer der Komponente, insbesondere der Funktions- oder Antriebskomponente (9; 9.4a, 9.4b, 9.4c) zugeordneten Steuereinrichtung (12; 12.4a, 12.4b, 12.4c) zum Auslesen wenigstens einer, die Betriebs- und/oder Funktionsweise der Komponente, insbesondere der Funktions- oder Antriebskomponente (9; 9.4a, 9.4b, 9.4c) wenigstens mittelbar beschreibenden Größe sind.

9. Servicesystem (8) nach einem der Ansprüche 1 bis 8, **dadurch gekennzeichnet, daß** die Serviceschnittstelleneinrichtung (1; 1.4c) in der Steuereinrichtung (12; 12.4c) integriert ist.

10. Servicesystem (8) nach einem der Ansprüche 1 bis 8, **dadurch gekennzeichnet, daß** die Serviceschnittstelleneinrichtung (1; 1.4a) in unmittelbarer räumlicher Nähe zur Steuereinrichtung (12; 12.4a) angeordnet ist und Mittel (13; 23.4a) zur Kopplung zwischen Serviceschnittstelleneinrichtung (1, 1.3a, 1.3b, 1.3c, 1.3d; 1.4a) und Steuereinrichtung (12; 12.4a) vorgesehen sind.

11. Servicesystem (8) nach einem der Ansprüche 1 bis 8, **dadurch gekennzeichnet, daß** die Serviceschnittstelleneinrichtung (1; 1.4b) in räumlich weiter Entfernung von der Steuereinrichtung (12; 12.4b) angeordnet ist und Mittel (13; 23.4b) zur Kopplung zwischen Serviceschnittstelleneinrichtung (1, 1.3a, 1.3b, 1.3c, 1.3d; 1.4b) und Steuereinrichtung (12; 12.4b) vorgesehen sind.

12. Servicesystem (8) nach einem der Ansprüche 10 oder 11, **dadurch gekennzeichnet, daß** die Mittel (13; 23.4a, 23.4b) zur Kopplung zwischen Serviceschnittstelleneinrichtung (1, 1.3a, 1.3b, 1.3c, 1.3d; 1.4a) und Steuereinrichtung (12; 12.4a, 12.4b) als Mittel zur seriellen Datenübertragung (14; 25), umfassend wenigstens eine Leitung (26), ausgeführt sind.

13. Servicesystem (8), nach einem der Ansprüche 1 bis 12, **dadurch gekennzeichnet, daß** über die Mittel (2) zur Datenübertragung die Serviceschnittstelleneinrichtung (1, 1.3a, 1.3b, 1.3c, 1.3d; 1.4a, 1.4b, 1.4c) wenigstens mittelbar mit einem Auswert- und/oder Überwachungs- und/oder Kontrollsystem (15; 15.3a, 15.3b, 15.3c, 15.3d) unter Bildung einer Gesamtübertragungsstrecke (17; 17.3a, 17.3b, 17.3c, 17.3d) gekoppelt ist.

14. Servicesystem (8) nach Anspruch 13, **dadurch gekennzeichnet, daß** die Datenübertragung über die Gesamtübertragungsstrecke (17, 16) drahtlos erfolgt.

15. Servicesystem (8) nach Anspruch 13, **gekennzeichnet durch** die folgenden Merkmale:
15.1 die Gesamtübertragungsstrecke (17, 17.3b, 17.3c, 17.3d) umfaßt wenigstens zwei Teilübertragungsstrecken (18; 18.3b1, 18.3b2, 18.3c1, 18.3c2, 18.3d1, 18.3d2) - eine erste Teilübertragungssrecke (18.3b1, 18.3c1, 18.3d1) und eine zweite Teilübertragungsstrecke (18.3b2, 18.3c2, 18.3d2);
15.2 zwischen den einzelnen Teilübertragungsstrecken (18.3b1, 18.3c1, 18.3d1) und (18.3b2, 18.3c2, 18.3d2) ist jeweils eine Vermittlungseinrichtung (22) angeordnet;
15.3 wenigstens die Datenübertragung auf der ersten Teilübertragungsstrecke (18.3b1, 18.3c1, 18.3d1) von der Serviceschnittstelleneinrichtung (1, 1.3a, 1.3b, 1.3c, 1.3d; 1.4a, 1.4b, 1.4c) und der Vermittlungseinrichtung (22) erfolgt drahtlos.

16. Servicesystem (8) nach Anspruch 15, **dadurch gekennzeichnet, daß** die Vermittlungseinrichtung (22) von einem neutralen Vermittler (28) gebildet wird.

17. Servicesystem (8) nach Anspruch 15 oder 16, **dadurch gekennzeichnet, daß** die Vermittlungseinrichtung (22) beim Betreiber oder Hersteller des die Komponente, insbesondere Funktions- oder Antriebskomponente (9; 9.4.a, 9.4.b, 9.4.c) enthaltenden Systems, insbesondere des Fahrzeuges angeordnet ist.

18. Servicesystem (8) nach Anspruch 15 bis 17, **dadurch gekennzeichnet, daß** die Vermittlungseinrichtung (22) bei einem Servicedienstleister für die Komponente, insbesondere Funktions-oder Antriebskomponente (9; 9.4.a, 9.4.b, 9.4.c) oder für das die Komponente, insbesondere Funktions- oder Antriebskomponente enthaltenden Systems, insbesondere Fahrzeuges angeordnet ist.

19. Servicesystem (8) nach einem der Ansprüche 15 bis 18, **dadurch gekennzeichnet, daß** die Vermittlungseinrichtung von einer Funktelekommunikationseinrichtung gebildet wird.

20. Servicesystem (8) nach einem der Ansprüche 15 bis 18, **dadurch gekennzeichnet, daß** die Vermittlungseinrichtungen von einer Mikroprozessor mit zugeordneter oder integrierte Sende- und Empfangseinrichtungen gebildet wird.

21. Servicesystem (8) nach einem der Ansprüche 1 bis 20, **dadurch gekennzeichnet, daß** die Serviceschnittstelleneinrichtung (1, 1.3a, 1.3b, 1.3c, 1.3d; 1.4a, 1.4b, 1.4c) einer Mehrzahl von Komponenten, insbesondere Funktions- oder Antriebskomponenten zugeordnet ist.

22. Servicesystem (8) nach einem der Ansprüche 1 bis 21, **dadurch gekennzeichnet, daß** das Auswert- und/oder Überwachungs-und/oder Kontrollsystem (15; 15.3a, 15.3b, 15.3c, 15.3d) beim Hersteller der Komponente, insbesondere der Funktions- oder Antriebskomponente (9; 9.4a, 9.4b, 9.4c) angeordnet ist.

23. Servicesystem (8) nach einem der Ansprüche 1 bis 22, **dadurch gekennzeichnet, daß** das Auswert- und/oder Überwachungs und/oder Kontrollsystem beim Betreiber der Komponente oder der die Komponente enthaltenden Systems oder einem Servicedienstleister angeordnet ist.

24. Verfahren zur Wartung und Überwachung der Funktionsweise einer Komponente, insbesondere einer Funktions- oder Antriebskomponente (9; 9.4a, 9.4b, 9.4c), insbesondere Getriebebaueinheit (10; 10.4a, 10.4b, 10.4c) mit einem Servicesystem (8) gemäß einem der Ansprüche 1 bis 23, bei welchem die Datenübertragung zwischen der Serviceschnittstelleneinrichtung (1, 1.3a, 1.3b, 1.3c, 1.3d; 1.4a, 1.4b, 1.4c) am Fahrzeug und dem Auswert- und/oder Überwachungs- und/oder Kontrollsystem (15) des Fahrzeuges gemäß einem der nachfolgend genannten Merkmale erfolgt:
a) fortlaufend oder
b) in bestimmten vordefinierten Zeitabständen oder
c) bei Vorliegen einer, auf einen kritischen Betriebszustand und/oder eine Schädigung der Komponente, insbesondere Funktions- oder Antriebskomponente (9; 9.4a, 9.4b, 9.4c) oder eines der Elemente der Komponente, insbesondere Funktions-oder Antriebskomponente (9; 9.4a, 9.4b, 9.4c) hinweisenden Größe oder bei Vorliegen eines komponentenspezifischen Schwellenwertes;
d) unabhängig von den in der Steuereinrichtung vorliegenden Größen bei gewünschter Aktualisierung der Steuersoftware oder Parametierung der Steuereinrichtung (12; 12.4a, 12.4b, 12.4c) durch den Hersteller oder Betreiber.

25. Verfahren nach Anspruch 24, **dadurch gekennzeichnet, daß** die Datenübertragung über wenigstens zwei, über eine Vermittlungseinrichtung (22) miteinander gekoppelte Teilübertragungsstrecken erfolgt, wobei die Datenübertragung zwischen Serviceschnittstelleneinrichtung (1) und erster Vermittlungseinrichtung (22) drahtlos erfolgt.

26. Verfahren nach Anspruch 25, **dadurch gekennzeichnet, daß** die Daten in der Vermittlungseinrichtung (22) zwischengespeichert werden und als Paket auf Anforderung oder bei Über- oder Unterschreitung eines komponentenspezifischen Schwellenwertes weitergeleitet werden.

27. Verfahren nach einem der Ansprüche 24 bis 26, **dadurch gekennzeichnet, daß** die ermittelten und übertragenen Betriebsdaten vom Auswert- und/oder Kontroll- und/oder Überwachungssystem dahingehend ausgewertet werden, daß Leitlinien zur Optimierung der Komponente bzw. des die Komponente enthaltenden Systemes erstellbar sind.

## Claims

1. Service system (8) for a component, in particular a functional or drive component (9; 9.4a, 9.4b, 9.4c), in particular a gear unit (10, 10.4a, 10.4b, 10.4c) of a drive system in vehicles;
1.1 with an evaluation and/or monitoring and/or control system (15; 15.3a, 15.3b, 15.3c, 15.3d) arranged outside the vehicle;
1.2 with a control device (11) assigned to the component, in particular the functional and or drive component (9; 9.4a, 9.4b, 9.4c), for controlling the mode of functioning and/or mode of operation of the component, in particular the functional or drive component (9; 9.4a, 9.4b, 9.4c) comprising at least one control unit (12; 12.4a, 12.4b, 12.4c);
1.3 with a permanently installed service interface device (1, 1.3a, 1.3b, 1.3c, 1.3d; 1.4a, 1.4b, 1.4c) assigned to the control unit (12; 12.4a, 12.4b, 12.4c) in the vehicle comprising means (6) for coupling with a control unit assigned to the component (9; 9.4a, 9.4b, 9.4c), in particular an electronic control unit (12; 12.4a, 12.4b, 12.4c) for reading out at least one variable describing at least indirectly the mode of operation and/or mode of functioning of the component (9; 9.4a, 9.4b, 9.4c);
1.4 with means (2) for wireless data transmission to an evaluation and/or monitoring and/or control system (15; 15.3a, 15.3b, 15.3c, 15.3d) or a communication device (22) arranged before said means with respect to the data transmission.

2. Service system (8) according to claim 1, **characterised in that** the means (2) for the wireless data transmission comprise at least one transmitting device (3).

3. Service system (8) according to claim 1 or 2, **characterised in that** the means (2) for wireless data transmission comprise a receiving device (4).

4. Service system (8) according to claims 1 to 3, **characterised in that** the means (2) are in the form of a radio telecommunications device (5).

5. Service system (8) according to one of claims 1 to 3, **characterised in that** the transmitting and/or receiving device are designed for processing and/or transmitting ultrasound signals.

6. Service system (8) according to one of claims 1 to 3, **characterised in that** the transmitting and/or receiving device are designed for processing and/or transmitting infrared signals.

7. Service system (8) according to one of claims 1 to 6, **characterised in that** the means (6) for coupling with a control unit (12; 12.4a, 12.4b, 12.4c) allocated to the component, in particular a functional or drive component (9; 9.4a, 9.4b, 9.4c) for reading out at least one variable describing at least indirectly the mode of operation and/or mode of functioning of the component, in particular the functional or drive component (9; 9.4a, 9.4b, 9.4c), comprise at least one connection device (7) for lines (24.1, 24.2, 24.n; 26) for parallel or serial data transmission.

8. Service system (8) according to claim 7, **characterised in that** the lines (24.1, 24.2 24.3, 24.n; 26) for parallel or serial data transmission are a component of the means (6) for coupling the service interface device (1) with a control unit (12; 12.4a, 12.4b, 12.4c) allocated to the component, in particular the functional or drive component (9; 9.4a, 9.4b, 9.4c) for reading out at least one variable describing at least indirectly the mode of operation and/or mode of functioning of the component, in particular the functional or drive component (9; 9.4a, 9.4b, 9.4c).

9. Service system (8) according to one of claims 1 to 8, **characterised in that** the service interface device (1; 1.4c) is integrated into the control unit (12; 12.4c).

10. Service system (8) according to one of claims 1 to 8, **characterised in that** the service interface device (1; 1.4a) is arranged in the immediate vicinity of the control unit (12; 12.4a) and means (13; 23.4a) are provided for coupling between the service interface device (1, 1.3a, 1.3b, 1.3c, 1.3d; 1.4a) and the control unit (12; 12.4a).

11. Service system (8) according to one of claims 1 to 8, **characterised in that** the service interface device (1; 1.4b) is arranged spatially at a greater distance from the control unit (12; 12.4b) and means (13; 23.4b) are provided for coupling between the service interface device (1, 1.3a, 1.3b, 1.3c, 1.3d; 1.4b) and the control unit (12; 12.4b).

12. Service system (8) according to one of claims 10 or 11, **characterised in that** the means (13; 23.4a, 23.4b) for coupling between the service interface device (1, 1.3a, 1.3b, 1.3c, 1.3d; 1.4a) and the control unit (12; 12.4a, 12.4b) are designed as means for serial data transmission (14; 25), comprising at least one line (26).

13. Service system (8) according to one of claims 1 to 12, **characterised in that** via the means (2) for data transmission the service interface device (1; 1.3a, 1.3b, 1.3c, 1.3d; 1.4a, 1.4b, 1.4c) is coupled at least indirectly to an evaluation and/or monitoring and/or control system (15; 15.3a, 15.3b, 15.3c, 15.3d) by forming an overall transmission path (17; 17.3a, 17.3b, 17.3c, 17.3d).

14. Service system (8) according to claim 13, **characterised in that** the data transmission is performed wirelessly via the overall transmission path (17, 16).

15. Service system (8) according to claim 13, **characterised by** the following features:
15.1 the overall transmission path (17, 17.3b, 17.3c, 17.3d) comprises at least two partial transmission paths (18; 18.3b1, 18.3b2, 18.3c1, 18.3c2, 18.3d1, 18.3d2) - a first partial transmission path (18.3b1, 18.3c1, 18.3d1) and a second partial transmission path (18.3b2, 18.3c2, 18.3d2);
15.2 a communication device (22) is arranged between the individual partial transmission paths (18.3b1, 18.3c1, 18.3d1) and (18.3b2 18.3c2, 18.3d2) respectively;
15.3 at least the data transmission on the first partial transmission path (18.3b1, 18.3c1, 18.3d1) is performed wirelessly from the service interface device (1, 1.3a, 1.3b, 1.3c, 1.3d; 1.4a, 1.4b, 1.4c) and the communication device (22).

16. Service system (8) according to claim 15, **characterised in that** the communication device (22) is in the form of a neutral connector (28).

17. Service system (8) according to claim 15 or 16 **characterised in that** the communication device (22) is arranged by the operator or manufacturer of the system, in particular a vehicle, containing the component, in particular the functional or drive component (9; 9.4a, 9.4b, 9.4c).

18. Service system (8) according to claims 15 to 17, **characterised in that** the communication device (22) is arranged by the service provider for the component, in particular a functional or drive component (9; 9.4a, 9.4b, 9.4c) or for the system, in particular a vehicle, comprising the component, in particular the functional or drive component.

19. Service system (8) according to one of claims 15 to 18, **characterised in that** the communication device is in the form of a radio telecommunications device.

20. Service system (8) according to one of claims 15 to 18 **characterised in that** the communication device is in the form of a microprocessor with allocated or integrated transmitting and receiving devices.

21. Service system (8) according to one of claims 1 to 20, **characterised in that** the service interface device (1, 1.3a, 1.3b, 1.3c, 1.3d; 1.4a, 1.4b, 1.4c) is allocated to a plurality of components, in particular functional or drive components.

22. Service system (8) according to one of claims 1 to 21, **characterised in that** the evaluation and/or monitoring and/or control system (15; 15.3a, 15.3b, 15.3c, 15.3d) is arranged by the manufacturer of the component, in particular the functional or drive component (9; 9.4a, 9.4b, 9.4c).

23. Service system (8) according to one of claims 1 to 22, **characterised in that** the evaluation and/or monitoring and/or control system is arranged by the operator of the component or the system containing the component or by a service provider.

24. Method for maintaining and monitoring the mode of functioning of a component, in particular a functional or drive component (9; 9.4a, 9.4b, 9.4c), in particular a gear unit (10; 10.4a, 10.4b, 10.4c), with a service system (8) according to one of claims 1 to 23, in which the data transmission between the service interface device (1, 1.3a, 1.3b, 1.3c, 1.3d; 1.4a, 1.4b, 1.4c) is performed on the vehicle and the evaluation and/or monitoring and/or control system (15) of the vehicle according to one of the following characteristics:
a) continuously or
b) at specific predetermined time intervals or
c) with the existence of a variable indicating a critical operating state and/or damage to the component, in particular the functional or drive component (9; 9.4a, 9.4b, 9.4c) or one of the elements of the component, in particular the functional or drive component (9; 9.4a, 9.4b, 9.4c) or with the existence of a component-specific threshold value;
d) regardless of the variables in the control unit with a desired update of the control software or parameterisation of the control unit (12; 12.4a, 12.4b, 12.4c) by the manufacturer or operator.

25. Method according to claim 24, **characterised in that** the data transmission is performed via at least two partial transmission paths coupled together via a communication device (22), whereby the data transmission is performed wirelessly between the service interface device (1) and the first communication device (22).

26. Method according to claim 25, **characterised in that** the data in the communication device (22) are temporarily stored and are sent on as a packet upon request or on exceeding or falling below a component-specific threshold.

27. Method according to one of claims 24 to 26, **characterised in that** the determined and transmitted operating data are evaluated by the evaluation and/or control and/or monitoring system to the effect that guiding lines can be established to optimise the component or the system containing the component.

## Revendications

1. Système de service (8) pour un composant, en particulier pour un élément fonctionnel ou une unité d'entraînement (9 ; 9.4a, 9.4b, 9.4c), en particulier une unité modulaire de boîte de vitesses (10 ; 10.4a, 10.4b, 10.4c) d'un système d'entraînement de véhicules comprenant :
1.1 un système d'analyse et/ou de surveillance et/ou de contrôle (15 ; 15.3a, 15.3b, 15.3c, 15.3d) disposé à l'extérieur du véhicule ;
1.2 une installation de commande (11) associée à un des composants, en particulier à l'élément fonctionnel ou à l'unité d'entraînement (9 ; 9.4a, 9.4b, 9.4c) pour commander le mode d'exploitation et/ou de fonctionnement du composant, en particulier de l'élément fonctionnel ou de l'unité d'entraînement (9 ; 9.4a, 9.4b, 9.4c), comprenant au moins un dispositif de commande (12 ; 12.4a, 12.4b, 12.4c) ;
1.3 un dispositif d'interface de service (1, 1.3a, 1.3b, 1.3c, 1.3d ; 1.4a, 1.4b, 1.4c) associé au dispositif de commande (12 ; 12.4a, 12.4b, 12.4c) dans le véhicule et installé de façon permanente comprenant des moyens (6) de couplage à un dispositif de commande associé au composant (9 ; 9.4a, 9.4b, 9.4c), en particulier un dispositif de commande (12 ; 12.4a, 12.4b, 12.4c) électronique pour relever au moins une valeur décrivant au moins de façon indirecte le mode d'exploitation et/ou de fonctionnement du composant (9 ; 9.4a, 9.4b, 9.4c) ;
1.4 des moyens (2) de transmission sans fil des données à un système d'analyse et/ou de surveillance et/ou de contrôle (15 ; 15.3a, 15.3b, 15.3c, 15.3d) ou à un dispositif de commutation (22) disposé en amont de celui-ci par rapport à la transmission des données.

2. Système de service (8) selon la revendication 1, **caractérisé en ce que** les moyens (2) de transmission sans fil des données comprennent au moins un dispositif d'émission (3).

3. Système de service (8) selon la revendication 1 ou 2, **caractérisé en ce que** les moyens (2) de transmission sans fil des données comprennent un dispositif de réception (4).

4. Système de service (8) selon l'une des revendications 1 à 3, **caractérisé en ce que** les moyens (2) sont composés d'un dispositif de radiotélécommunication (5).

5. Système de service (8) selon l'une quelconque des revendications 1 à 3, **caractérisé en ce que** le dispositif d'émission et/ou de réception est configuré pour traiter et/ou transmettre des signaux ultrasons.

6. Système de service (8) selon l'une quelconque des revendications 1 à 3, **caractérisé en ce que** le dispositif d'émission et/ou de réception est configuré pour traiter et/ou transmettre des signaux infrarouges.

7. Système de service (8) selon l'une quelconque des revendications 1 à 6, **caractérisé en ce que** les moyens (6) de couplage à un dispositif de commande (12 ; 12.4a, 12.4b, 12.4c) associé au composant, en particulier à l'élément fonctionnel ou à l'unité d'entraînement (9 ; 9.4a, 9.4b, 9.4c) pour relever au moins une valeur décrivant au moins de façon indirecte le mode d'exploitation et/ou de fonctionnement des composants, en particulier de l'élément fonctionnel ou de l'unité d'entraînement (9 ; 9.4a, 9.4b, 9.4c) comprennent au moins un dispositif de jonction (7) de câbles (24.1, 24.2, 24.n ; 26) pour la transmission de données en série ou en parallèle.

8. Système de service (8) selon la revendication 7, **caractérisé en ce que** les câbles (24.1, 24.2, 24.n ; 26) pour la transmission de données en série ou en parallèle font partie des moyens (6) de couplage du dispositif d'interface de service (1) à un dispositif de commande (12 ; 12.4a, 12.4b, 12.4c) associé au composant, en particulier à l'élément fonctionnel ou à l'unité d'entraînement (9 ; 9.4a, 9.4b, 9.4c) pour relever au moins une valeur décrivant au moins de façon indirecte le mode d'exploitation et/ou de fonctionnement du composant, en particulier de l'élément fonctionnel ou de l'unité d'entraînement (9 ; 9.4a, 9.4b, 9.4c).

9. Système de service (8) selon l'une quelconque des revendications 1 à 8, **caractérisé en ce que** le dispositif d'interface de service (1 ; 1.4c) est intégré au dispositif de commande (12 ; 12.4c).

10. Système de service (8) selon l'une quelconque des revendications 1 à 8, **caractérisé en ce que** le dispositif d'interface de service (1 ; 1.4a) est disposé à proximité immédiate dans l'espace du dispositif de commande (12 ; 12.4a) et **en ce que** des moyens (13 ; 23.4a) de couplage sont prévus entre le dispositif d'interface de service (1, 1.3a, 1.3b, 1.3c, 1.3d ; 1.4a) et le dispositif de commande (12 ; 12.4a).

11. Système de service (8) selon l'une quelconque des revendications 1 à 8, **caractérisé en ce que** le dispositif d'interface de service (1 ; 1.4b) est disposé à plus grande distance du dispositif de commande (12 ; 12.4b) et **en ce que** des moyens (13 ; 23.4b) de couplage sont disposés entre le dispositif d'interface de service (1, 1.3a, 1.3b, 1.3c, 1.3d ; 1.4b) et le dispositif de commande (12 ; 12.4b).

12. Système de service (8) selon l'une quelconque des revendications 10 ou 11, **caractérisé en ce que** les moyens (13 ; 23.4a, 23.4b) de couplage entre le dispositif d'interface de service (1, 1.3a, 1.3b, 1.3c, 1.3d ; 1.4a) et le dispositif de commande (12 ; 12.4a, 12.4b) sont configurés comme des moyens de transmission de données en série (14 ; 25), comprenant au moins un câble (26).

13. Système de service (8) selon l'une quelconque des revendications 1 à 12, **caractérisé en ce que** le dispositif d'interface de service (1, 1.3a, 1.3b, 1.3c, 1.3d ; 1.4a, 1.4b, 1.4c) est couplé au moins de façon indirecte à un système d'analyse et/ou de surveillance et/ou de contrôle (15 ; 15.3a, 15.3b, 15.3c, 15.3d) via des moyens (2) de transmission des données en formant un segment de transmission d'ensemble (17 ; 17.3a, 17.3b, 17.3c, 17.3d).

14. Système de service (8) selon la revendication 13, **caractérisé en ce que** la transmission des données se fait sans fil via le segment de transmission d'ensemble (17, 16).

15. Système de service (8) selon la revendication 13, **caractérisé par** les caractéristiques suivantes :
15.1 le segment de transmission d'ensemble (17, 17.3b, 17.3c, 17.3d) comprend au moins deux segments de transmission partiels (18 ; 18.3b1, 18.3b2, 18.3c1, 18.3c2, 18.3d1, 18.3d2)-un premier segment de transmission partiel (18.3b1, 18.3c1, 18.3d1) et un deuxième segment de transmission partiel (18.3b2, 18.3c2, 18.3d2) ;
15.2 un dispositif de commutation (22) est disposé respectivement entre les différents segments de transmission partiels (18.3b1, 18.3c1, 18.3d1) et (18.3b2, 18.3c2, 1 8.3d2) ;
15.3 au moins la transmission des données sur le premier segment de transmission partiel (18.3b1, 18.3c1, 18.3d1) se fait sans fil, du dispositif d'interface de service (1, 1.3a, 1.3b, 1.3c, 1.3d ; 1.4a, 1.4b, 1.4c) et du dispositif de commutation (22).

16. Système de service (8) selon la revendication 15, **caractérisé en ce que** le dispositif de commutation (22) est composé d'un commutateur (28) neutre.

17. Système de service (8) selon la revendication 15 ou 16, **caractérisé en ce que** le dispositif de commutation (22) est disposé chez l'exploitant ou chez le fabricant du système, en particulier du véhicule, qui contient le composant, en particulier l'élément fonctionnel ou l'unité d'entraînement (9 ; 9.4.a, 9.4.b, 9.4.c).

18. Système de service (8) selon la revendication 15 à 17, **caractérisé en ce que** le dispositif de commutation (22) est disposé chez un prestataire de service pour le composant, en particulier l'élément fonctionnel ou l'unité d'entraînement (9 ; 9.4.a, 9.4.b, 9.4.c) ou pour le système, en particulier du véhicule, qui contient le composant, en particulier l'élément fonctionnel ou l'unité d'entraînement.

19. Système de service (8) selon l'une quelconque des revendications 15 à 18, **caractérisé en ce que** le dispositif de commutation est composé d'un dispositif de radiotélécommunication.

20. Système de service (8) selon l'une quelconque des revendications 15 à 18, **caractérisé en ce que** les dispositifs de commutation sont composés d'un microprocesseur muni de dispositifs d'émission et/ou de réception associés ou intégrés.

21. Système de service (8) selon l'une quelconque des revendications 1 à 20, **caractérisé en ce que** le dispositif d'interface de service (1, 1.3a, 1.3b, 1.3c, 1.3d ; 1.4a, 1.4b, 1.4c) est associé à une pluralité de composants, en particulier d'éléments fonctionnels ou d'unités d'entraînement.

22. Système de service (8) selon l'une quelconque des revendications 1 à 21, **caractérisé en ce que** le système d'analyse et/ou de surveillance et/ou de contrôle (15 ; 15.3a, 15.3b, 15.3c, 15.3d) est disposé chez le fabricant du composant, en particulier de l'élément fonctionnel ou de l'unité d'entraînement (9 ; 9.4a, 9.4b, 9.4c).

23. Système de service (8) selon l'une quelconque des revendications 1 à 22, **caractérisé en ce que** le système d'analyse et/ou de surveillance et/ou de contrôle est disposé chez l'exploitant du composant ou du système contenant le composant ou chez un prestataire de service.

24. Méthode d'entretien et de surveillance du mode de fonctionnement d'un composant, en particulier d'un élément fonctionnel ou d'une unité d'entraînement (9 ; 9.4a, 9.4b, 9.4c), en particulier de l'unité modulaire de boîte de vitesses (10 ; 10.4a, 10.4b, 10.4c) avec un système de service (8) selon l'une quelconque des revendications 1 à 23, dans laquelle la transmission des données entre le dispositif d'interface de service (1, 1.3a, 1.3b, 1.3c, 1.3d ; 1.4a, 1.4b, 1.4c) sur le véhicule et le système d'analyse et/ou de surveillance et/ou de contrôle (15) du véhicule se fait selon l'une quelconque des caractéristiques suivantes :
a) de façon continue ou
b) à des intervalles de temps prédéterminés ou
c) en cas de valeur indiquant un fonctionnement critique et/ou un endommagement du composant, en particulier de l'élément fonctionnel ou de l'unité d'entraînement (9 ; 9.4a, 9.4b, 9.4c) ou d'un des éléments du composant, en particulier de l'élément fonctionnel ou de l'unité d'entraînement (9 ; 9.4a, 9.4b, 9.4c) ou en cas de dépassement de la valeur de seuil propre au composant ;
d) indépendamment des valeurs correspondant au dispositif de commande, lors de l'actualisation souhaitée du logiciel de commande ou du paramétrage du dispositif de commande (12 ; 12.4a, 12.4b, 12.4c) par le fabricant ou l'exploitant.

25. Méthode selon la revendication 24, **caractérisée en ce que** la transmission des données se fait via au moins deux segments de transmission partiels couplés entre eux via un dispositif de commutation (22), la transmission des données se faisant sans fil entre le dispositif d'interface de service (1) et le premier dispositif de commutation (22).

26. Méthode selon la revendication 25, **caractérisée en ce que** les données sont mémorisées de façon temporaire dans le dispositif de commutation (22) et transmises sous la forme de paquet à la demande ou lorsqu'une valeur de seuil inférieure ou supérieure propre au composant est dépassée.

27. Méthode selon l'une quelconque des revendications 24 à 26, **caractérisée en ce que** les données d'exploitation calculées et transmises sont analysées par le système d'analyse et/ou de contrôle et/ou de surveillance afin que des lignes pilotes puissent être établies pour optimiser le composant et/ou le système contenant le composant.
